# EUROPÄISCHE PATENTSCHRIFT

(11) **EP 0 565 191 B1**
(45) Veröffentlichungstag und Bekanntmachung des Hinweises auf die Patenterteilung: **21.01.1998**
(21) Anmeldenummer: 93200992.1
(22) Anmeldetag: 06.04.1993
(51) Int. Cl.: G01S 5/14

(54) **Anordnung zur Positionsbestimmung eines Landfahrzeugs**
Device for measuring the position of a ground vehicle
Dispositif de mesure de position d'un véhicule terrestre

(30) Priorität: 09.04.1992 DE 4211933
(43) Veröffentlichungstag der Anmeldung: 13.10.1993
(73) Patentinhaber: Philips Patentverwaltung GmbH, 22335 Hamburg (DE); Philips Electronics N.V., 5621 BA Eindhoven (NL)
(72) Erfinder: Fernhout, Hermann Cornelis Ir., W-2000 Hamburg 1 (DE)
(74) Vertreter: von Laue, Hanns-Ulrich, Dipl.-Ing.

(56) Entgegenhaltungen:
- DE-A- 4 033 326
- DE-A- 4 130 367
- US-A- 4 357 593
- US-A- 4 903 212

## Beschreibung

Die Erfindung betrifft eine Anordnung zur Positionsbestimmung eines Landfahrzeuges mit einem GPS-(Global-Positioning-System-)Empfänger, welcher mit Hilfe von Satelliten empfangenen Daten regelmäßig wiederholt Positions-Daten des Fahrezugs liefert, mit einer Anordnung zur Durchführung einer Koppelnavigation anhand der Positions-Daten des GPS-Empfängers, eines Kompasses und wenigstens eines Radsensors und mit einer Korrektur-Einheit, welche die von der Anordnung zur Durchführung der Koppelnavigation regelmäßig wiederholt gelieferten Koppelnavigationswerte in Abhängigkeit von Vergleichen mit aus einem Massenspeicher ausgelesenen Straßen- oder Schienenpositions-Koordinaten, insbesondere mit markanten Straßenoder Schienenpositions-Koordinaten, korrigiert, und als Fahrzeug-Positions-Koordinaten liefert.

Bei bekannten derartigen Anordnungen wird mittels Koppelnavigation (engl.: dead-reckoning), welche insbesondere mittels eines Kompasses mit einem oder mehreren Radsensoren arbeitet, laufend die aktuelle Fahrzeugposition bestimmt. Die dabei auftretenden Fehler können durch Vergleich mit aus einem Massenspeicher ausgelesenen Straßenpositions-Koordinaten korrigiert werden (engl.: map matching). Insbesondere markante Straßenpositions-Koordinaten, beispielsweise Kurven im Straßenverlauf oder Kreuzungen, können leicht erkannt werden und es kann die mittels Koppelnavigation bestimmte Position des Fahrzeugs entsprechend den Koordinaten der bekannten markanten Punkte korrigiert werden.

Diese Kombination von Koppelnavigation und Korrektur durch Straßenpositions-Koordinaten versagt bei Start des Fahrzeugs bzw. allgemein bei unbekannten Straßenpositions-Koordinaten, die sich auch nach Transport des Fahrzeugs mittels Bahn oder Schiff oder ähnlichem ergeben können. Dazu ist bei bekannten Anordnungen ein GPS-Empfänger vorgesehen, welcher Signale von GPS-Satelliten empfängt und anhand deren Empfang, insbesondere aus den Phasenverschiebungen von deren Signalen relativ zueinander, die Position des GPS-Empfängers bzw. des Fahrzeugs berechnen kann. Die Genauigkeit dieser Positionsbestimmung mittels eines GPS-Empfängers beträgt jedoch nur einige 100 Meter, was beispielsweise für die genaue Bestimmung eines Standorts des Fahrzeugs in einer Stadt nicht ausreichend ist.

Bei bekannten Anordnungen dieser Art wird die Korrektur der von dem GPS-Empfänger gelieferten Positions-Daten mittels eines Datenkanals vorgenommen. Über diesen Datenkanal wird dem GPS-Empfänger von außen über zusätzlich vorzusehende Infrastruktur wiederholt die sich ständig ändernde Größe und Richtung des Fehlers mitgeteilt.

Es ist Aufgabe der Erfindung, eine Anordnung zu schaffen, die die Korrektur der Positions-Daten des GPS-Empfängers auf möglichst einfache Weise vornimmt.

Diese Aufgabe ist erfindungsgemäß dadurch gelöst, daß die von der Korrektureinheit gelieferten Fahrzeug-Positions-Koordinaten dem GPS-Empfänger zugeführt werden und daß in dem GPS-Empfänger die aus den Satellitenempfang gewonnenen Positions-Daten nach Maßgabe der von der Korrektur-Einheit gelieferten Fahrzeug-Positions-Koordinaten berichtigt und in der berichtigten Form als Positions-Daten an die Anordnung zur Durchführung der Koppelnavigation geliefert werden.

Die von der Korrektureinheit gelieferten Fahrzeug-Positions-Koordinaten, die laufend die aktuelle Fahrzeugposition angeben, werden also auch dazu verwendet, im GPS-Empfänger dessen Positions-Daten zu korrigieren. Dies ist deshalb möglich, weil die Fahrzeug-Positions-Koordinaten, die mit den aus dem Massenspeicher ausgelesenen Straßenpositions-Koordinaten verglichen und entsprechend korrigiert worden sind, recht genau sind. Der Fehler in den Positions-Daten des GPS-Empfängers ist in jedem Falle größer und verändert sich zeitlich nur sehr langsam. Es kann daher die Korrektur mittels der Fahrzeug-Positions-Koordinaten in hinreichenden Zeitabständen vorgenommen werden. Der GPS-Empfänger liefert nachfolgend recht genaue Positions-Daten, so daß nachfolgend die in der Korrektur-Einheit erfolgende Korrektur kleiner ausfallen kann. In diesem quasi rückgekoppelten Zustand des Systems sind schließlich die GPS-Daten so genau, daß sie gebenenfalls recht genau die aktuelle Position angeben.

Bei dieser Lösung zur Korrektur der Daten des GPS-Empfängers kann insbesondere ein externer Datenkanal entfallen, der zusätzliche Infrastruktur durch Dritte erfordert. Ferner ist die räumliche Trennung zwischen einem externen Datengeber und dem GPS-Empfänger im Fahrzeug aufgehoben, wodurch zusätzliche Fehler, die sich durch diese Trennung ergeben, entfallen. Dadurch entfallen auch die Fehler, die bei räumlicher Trennung durch die begrenzte Übertragungsgeschwindigkeit entstehen. Die Korrektur der Daten des GPS-Empfängers kann sehr genau erfolgen. Da die Anordnung zur Durchführung der Koppelnavigation sowie die Korrektur-Einheit in den meisten Anordnungen zur Positionsbestimmung eines Landfahrzeuges ohnehin vorgesehen sind, ist der zusätzliche Aufwand für die Korrektur der Daten des GPS-Empfängers äußerst gering.

Gemäß weiteren Ausgestaltungen der Erfindung ist vorgesehen, daß die Korrektur-Einheit jeweils bei Auftreten eines neuen markanten Punktes in den Straßenpositions-Koordinaten einen neuen internen Korrekturwert bestimmt, in Abhängigkeit dessen die von der Anordnung zur Durchführung der Koppelnavigation nachfolgend gelieferten Daten korrigiert werden und daß der interne Korrekturwert bis zum nächsten markanten Punkt in den Straßenpositions-Koordinaten, für den ein neuer interner Korrekturwert bestimmt wird, gültig ist.

Die in der Korrektur-Einheit erfolgende Korrektur der von der Anordnung zur Durchführung der Koppelnavigation regelmäßig wiederholt gelieferten Koppelnavigationswerte kann insbesondere anhand von markanten Punkten im Straßenverlauf und den zugehörigen in dem Massenspeicher abgelegten Straßenpositions-Koordinaten erfolgen. Derartige markante Punkte treten in unregelmäßigen Zeitabständen auf, so daß zwischen diesen Punkten nicht immer eine Korrektur möglich ist. An diesen markanten Punkten kann jedoch eine Korrektur auf sehr genaue Weise erfolgen, so daß diese Korrektur in zeitlich unregelmäßigen Abständen ausreichend ist. Es wird nun also an jedem neuen markanten Punkt in den Straßenpositions-Koordinaten ein neuer interner Korrekturwert in der Korrektureinheit gebildet, der nachfolgend gültig ist, bis an einem nachfolgenden markanten Punkt ein neuer Korrekturwert gebildet wird. Auch die Korrektur der Positions-Daten des GPS-Empfängers wird entsprechend diesem internen Korrekturwert und der von der Korrektur-Einheit nachfolgend gelieferten Fahrzeug-Positions-Koordinaten vorgenommen. Die Genauigkeit dieser Korrektur ist ausreichend, da sich der Fehler in den Positions-Daten des GPS-Empfängers nur sehr langsam verändert und im allgemeinen davon ausgegangen werden kann, daß er zwischen zwei markanten Punkten in den Straßenpositions-Koordinaten etwa gleich bleibt.

Als Massenspeicher kann vorteilhafterweise, wie gemäß einer weiteren Ausgestaltung der Erfindung vorgesehen ist, eine Compact-Disc-Interactive vorgesehen sein, welche hohe Speicherdichte mit geringer Zugriffszeit kombiniert und welche voraussichtlich in der Lage ist, einen großen Teil der erforderlichen Straßenpositions-Koordinaten eines Landes von der Größe Deutschlands aufzunehmen.

Anhand der einzigen Figur wird ein Ausführungsbeispiel der Erfindung näher erläutert.

In der Figur ist eine erfindungsgemäße Anordnung zur Positionsbestimmung eines Landfahrzeuges in Form eines Blockschaltbildes dargestellt.

Die Anordnung zur Positionsbestimmung eines Landfahrzeuges weist eine Anordnung 1 zur Durchführung einer Koppelnavigation auf. Dieser Anordnung 1 sind ein Kompaß 2 und wenigstens ein Radsensor 3 zugeordnet. Der Anordnung 1 ist eine Korrektur-Einheit 4 nachgeschaltet, welcher ein Massenspeicher 5 zugeordnet ist, bei welchem es sich beispielsweise um eine Compact-Disc-Interactive-Einheit handeln kann.

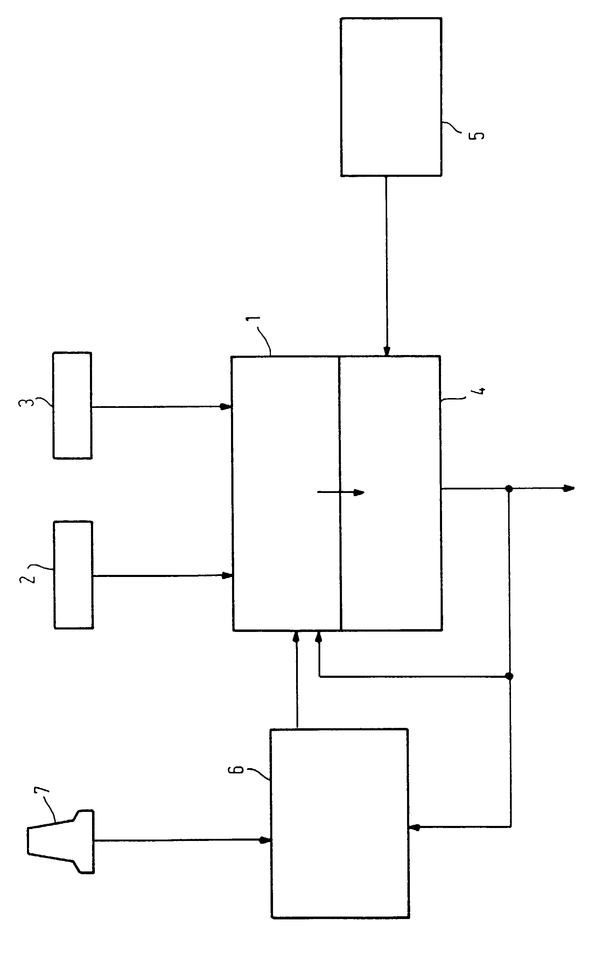

Es ist ferner ein GPS-Empfänger 6 vorgesehen, welcher anhand der Empfangs-Daten mehrerer Satelliten eine Positionsbestimmung eines Fahrzeuges, in das die in der Fig. 1 dargestellte Anordnung eingebaut sein kann, vornehmen kann. Zum Empfang der entsprechenden Satelliten ist eine Satelliten-Emfpangs-Antenne vorgesehen, die in der Fig. mit 7 bezeichnet ist.

Der GPS-Empfänger 6 liefert laufend Positions-Daten des Fahrzeuges an die Anordnung 1 zur Durchführung eines Koppelnavigation. Ferner wird dieser Anordnung mittels des Kompasses 2 die Fahrtrichtung bzw. Standrichtung des Fahrzeuges übermittelt. Mittels des Randsensors 3, kann die Anordnung 1 die Fahrstrecke und kurzfristige Fahrtrichtungsänderung in der entsprechenden Richtung ermitteln. Aus diesen Daten kann eine Koppelnavigation in an sich bekannter Weise durchgeführt werden, mittels derer laufend neue Positions-Daten ermittelt werden. Diese Daten werden an die Korrektur-Einheit 4 geliefert, welche diese Daten mit aus dem Massenspeicher 5 ausgelesenen Straßenpositions-Koordinaten vergleicht. An markanten Punkten im Straßenverlauf, beispielsweise in Kurven oder an Kreuzungen, kann anhand der Straßenpositions-Koordinaten sicher der momentante Standort erkannt werden. Es wird dann in der Korrektureinheit ein entsprechender Korrekturwert gebildet und die von der Anordnung 1 gelieferten Daten werden in Abhängigkeit dieses Korrekturwertes korrigiert. Die Korrektur-Einheit 4 liefert dann die berichtigten Fahrzeug-Positions-Koordinaten. Diese Koordinaten geben laufend erneuert die Fahrzeugposition an.

Dieses Ausgangssignal, das zur weiteren Verarbeitung bereitgestellt wird, wird nun auch der Anordnung 1 sowie dem GPS-Empfänger 6 zugeführt.

Die von dem GPS-Empfänger 6 anhand des Satellitenempfangs ermittelten Positions-Daten weisen einen (von dem Systembetreiber des GPS-Systems durchaus beabsichtigten) Fehler von etwa 100 bis 200 Metern auf. Anhand der von der Korrektur-Einheit 4 gelieferten Fahrzeug-Positions-Koordinaten, die durch den Vergleich mit dem aus dem Massenspeicher 5 ausgelesenen Straßenpositions-Koordinaten recht genau sind, wird nun in dem GPS-Empfänger 6 eine Korrektur von dessen Positons-Daten vorgenommen. Der GPS-Empfänger 6 liefert dann ausgangsseitig bereits korrigierte Positions-Daten.

In der Anordnung 1 kann dann aufgrund der von dem GPS-Empfänger gelieferten korrigierten Positions-Daten bzw. der von der Korrektur-Einheit 4 gelieferten Fahrzeug-Positions-Koordinaten recht genaue Koppelnavigation durchgeführt werden.

Die Genauigkeit der in der Fig. dargestellten Anordnung zur Positionsbestimmung eines Landfahrzeuges ist somit recht genau. Die Genauigkeit während der Fahrt des Fahrzeugs ergibt sich durch die Kombination von Koppelnavigation mit dem Vergleich der Straßenpositions-Koordinaten aus dem Massenspeicher und der laufenden Korrektur der GPS-Daten. Auch nach Transport eines Fahrzeugs bzw. Neustart eines Fahrzeugs an einem unbekannten Ort, kann durch die Korrektur der Daten des GPS-Empfängers eine recht genaue Positionsbestimmung des Fahrzeugs, in das die Anordnung eingebaut ist, vorgenommen werden.

## Patentansprüche

1. Anordnung zur Positionsbestimmung eines Landfahrzeuges mit einem GPS-(Global-Positioning-System-) Empfänger (6), welcher mit Hilfe von von Satelliten empfangenen Daten regelmäßig wiederholt Positions-Daten des Fahrzeugs liefert, mit einer Anordnung (1) zur Durchführung einer Koppelnavigation anhand der Positions-Daten des GPS-Empfängers (6), eines Kompasses (2) und wenigstens eines Radsensors (3) und mit einer Korrektur-Einheit (4), welche die von der Anordnung (1) zur Durchführung der Koppelnavigation regelmäßig wiederholt gelieferten Koppelnavigationswerte in Abhängigkeit von Vergleichen mit aus einem Massenspeicher (5) ausgelesenen Straßen- oder Schienenpositions-Koordinaten, insbesondere mit markanten Straßen- oder Schienenpositions-Koordinaten, korrigiert, und als Fahrzeug-Positions-Koordinaten liefert,
dadurch gekennzeichnet, daß die von der Korrektur-Einheit (4) gelieferten Fahrzeug-Positions-Koordinaten dem GPS-Empfänger (6) zugeführt werden und daß in dem GPS-Empfänger (6) die aus dem Satellitenempfang gewonnenen Positions-Daten nach Maßgabe der von der Korrektur-Einheit (4) gelieferten Fahrzeug-Positions-Koordinaten berichtigt und in der berichtigten Form als Positions-Daten an die Anordnung (1) zur Durchführung der Koppelnavigation geliefert werden.

2. Anordnung nach Anspruch 1,
dadurch gekennzeichnet, daß die Korrektur-Einheit (4) jeweils bei Auftreten eines neuen markanten Punktes in den Straßen- oder Schienenpositions-Koordinaten einen neuen internen Korrekturwert bestimmt, in Abhängigkeit dessen die von der Anordnung (1) zur Durchführung der Koppelnavigation nachfolgend gelieferten Daten korrigiert werden.

3. Anordnung nach Anspruch 2,
dadurch gekennzeichnet, daß der interne Korrekturwert bis zum nächsten markanten Punkt in den Straßen- oder Schienenpositions-Koordinaten, für den ein neuer interner Korrekturwert bestimmt wird, gültig ist.

4. Anordnung nach einem der Ansprüche 1 bis 3,
dadurch gekennzeichnet, daß als Massenspeicher (5) eine Compact-Disc-Interactive vorgesehen ist.

5. Fahrzeug mit einer Anordnung zur Positionsbestimmung nach einem der Ansprüche 1 bis 4.

## Claims

1. A device for determining the position of a vehicle, comprising a GPS (Global Positioning System) receiver (6) which supplies at regular intervals position data of the vehicle on the basis of data received from satellites, a device (1) for performing dead-reckoning on the basis of the position data from the GPS receiver (6), a compass (2) and at least one wheel sensor (3), and a correction unit (4) which corrects the dead-reckoning values, supplied at regular intervals by the dead-reckoning device (1), in dependence on comparisons with road or rail position coordinates read from a mass memory (5), notably with characteristic road or rail position coordinates, which correction unit outputs said corrected values as vehicle position coordinates, characterized in that the vehicle position coordinates supplied by the correction unit (4) are applied to the GPS receiver (6), and that the position data derived from the satellite reception is corrected in the GPS receiver (6) in conformity with the vehicle position coordinates supplied by the correction unit (4), the data being applied to the dead-reckoning device (1) as position data.

2. A device as claimed in Claim 1, characterized in that the correction unit (4) determines a new internal correction value each time when a new characteristic point occurs in the road or rail position coordinates, the data subsequently supplied by the dead-reckoning device (1) being corrected in dependence thereon.

3. A device as claimed in Claim 2, characterized in that the internal correction value remains valid until the occurrence of the next characteristic point in the road or rail position coordinates for which a new internal correction value is determined.

4. A device as claimed in any one of the Claims 1 to 3, characterized in that a Compact Disc Interactive is provided as the mass memory (5).

5. A vehicle comprising a device for position determination as claimed in any one of the Claims 1 to 4.

## Revendications

1. Dispositif de détermination de la position d'un véhicule terrestre avec un récepteur GPS (Global-Positioning-System) (6) qui délivre à un rythme régulier des données de position du véhicule à l'aide de données reçues à partir de satellites avec un dispositif (1) pour l'exécution d'une navigation à l'estime à l'aide des données de position du récepteur GPS (6), un compas (2) et au moins un capteur de roue (3) et avec une unité de correction (4) qui corrige les valeurs de navigation à l'estime délivrées par le dispositif (1) à un rythme régulier en vue de l'exécution de la navigation à l'estime en fonction de comparaisons avec des coordonnées de position routière ou ferroviaire prélevées d'une mémoire de masse (5) en particulier avec des coordonnées de position routière ou ferroviaire marquantes et les délivre comme coordonnées de position du véhicule, caractérisé en ce que les coordonnées de position du véhicule délivrées par l'unité de correction (4) sont amenées au récepteur GPS (6) et que les données de position obtenues à partir de la réception satellite sont rectifiées en fonction des coordonnées de position du véhicule délivrées par l'unité de correction (4) dans le récepteur GPS (6) et amenées, sous forme corrigée, comme données de position au dispositif (1) pour l'exécution de la navigation à l'estime.

2. Dispositif selon la revendication 1, caractérisé en ce que l'unité de correction (4) détermine respectivement lors de l'apparition d'un nouveau point marquant dans les coordonnées de position routière ou ferroviaire une nouvelle valeur de correction interne en fonction de laquelle les données délivrées ensuite par le dispositif (1) pour l'exécution de la navigation à l'estime sont corrigées.

3. Dispositif selon la revendication 2, caractérisé en ce que la valeur de correction interne est valable jusqu'au point marquant suivant dans les coordonnées de position routière ou ferroviaire pour lesquelles une nouvelle valeur de correction interne est déterminée.

4. Dispositif selon l'une des revendications 1 à 3, caractérisé en ce qu'un Compact Disc interactif est prévu comme mémoire de masse (5).

5. Véhicule avec un dispositif de détermination de la position selon l'une des revendications 1 à 4.
